# EUROPEAN PATENT APPLICATION

(11) **EP 3 451 326 A1**
(43) Date of publication of application: **06.03.2019**
(21) Application number: 17189254.0
(22) Date of filing: 04.09.2017
(51) Int. Cl.: G10H 1/00, G06F 3/048

(54) **MOBILE APPLICATION FOR GENERATING AUDIO OUT OF A DIGITAL PICTURE**

(71) Applicant: Dobroiu, Ioana Gabriela, 011071 Bucharest (RO)
(72) Inventor: Dobroiu, Ioana Gabriela, 011071 Bucharest (RO)

(57) **Abstract**

*Purpose: To replace postcards and become the new way of photography fans to conduct their holidays. Intended for Smart Cities, designed for Smart Tourism. By having several compositions of his*/*her holiday the regular smart city tourist becomes*

*Function: Converts images into individual sound compositions that sound harmonic. Each picture gives out individual tone.*

*Code Mechanism: transforms images based on shape and color image into musical composition.*

The mobile application is to function on android devices and deliver a QR code/ song deposit on Sound Cloud (for example) available for download and listening anytime. So the tourist becomes a composer the old postcard gets replaced by a new synesthetic experience Photo.

Music samples are created and run out of an online cloud repository where files are mapped and linked together by associating a given color ("light red","bright red", light green" "dark green", etc...) to an audio file ("rosu_deschis.wav", "rosu_aprins.wav.wav", "verde_deschis.wav", "verde_inchis.wav", etc...) .

## Description

### Music Coding Model:

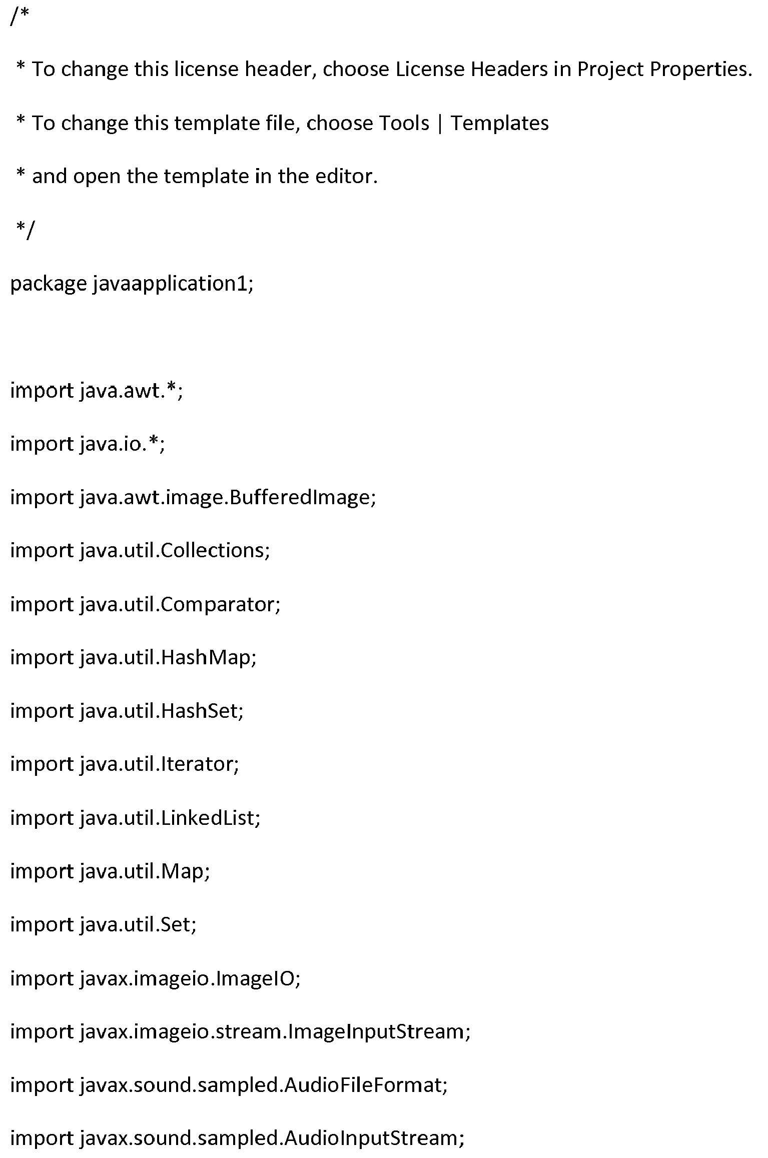

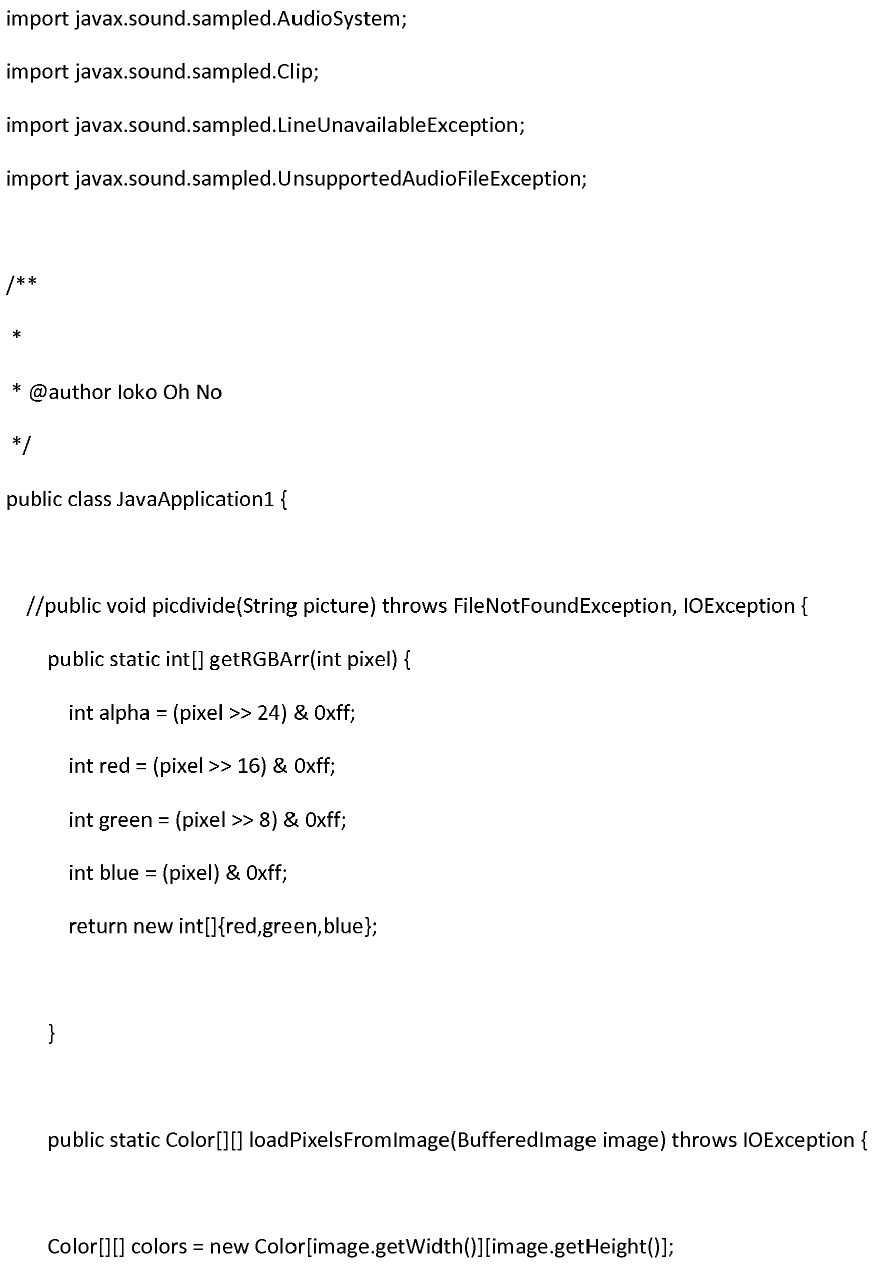

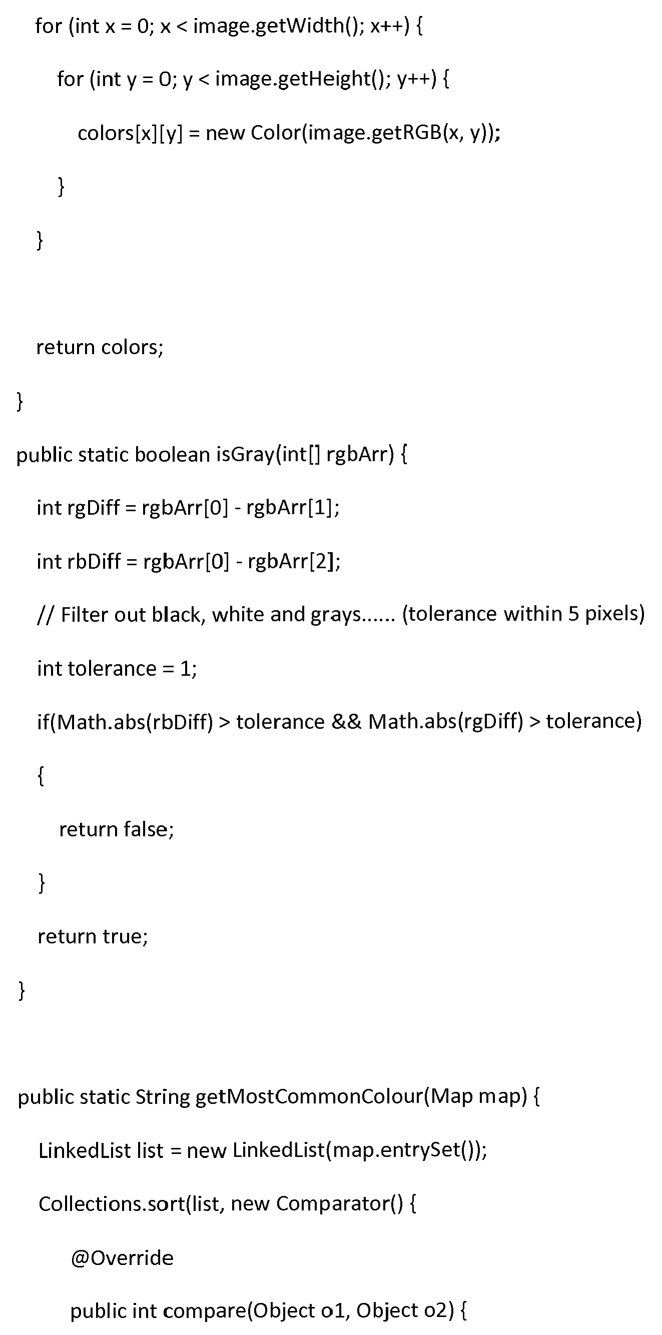

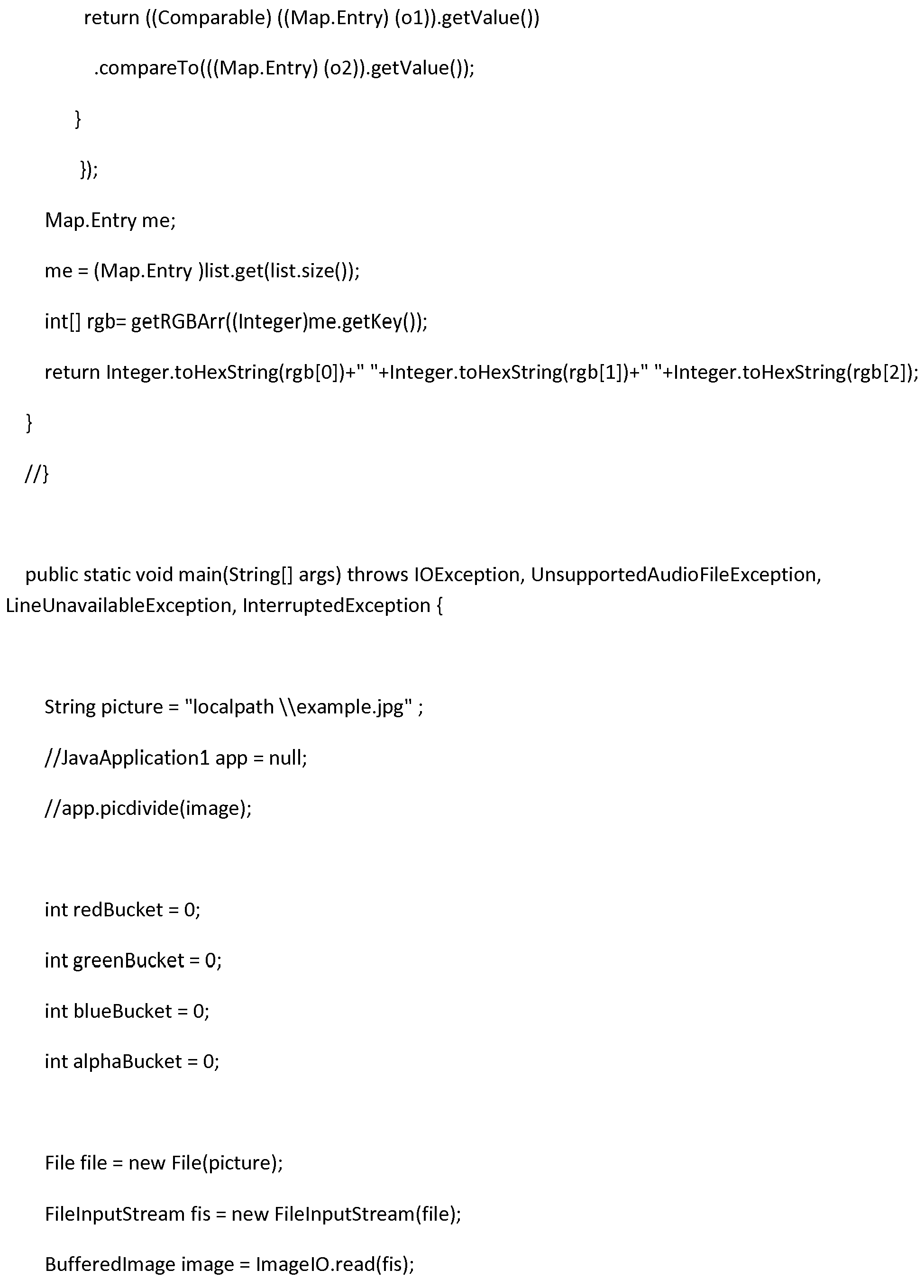

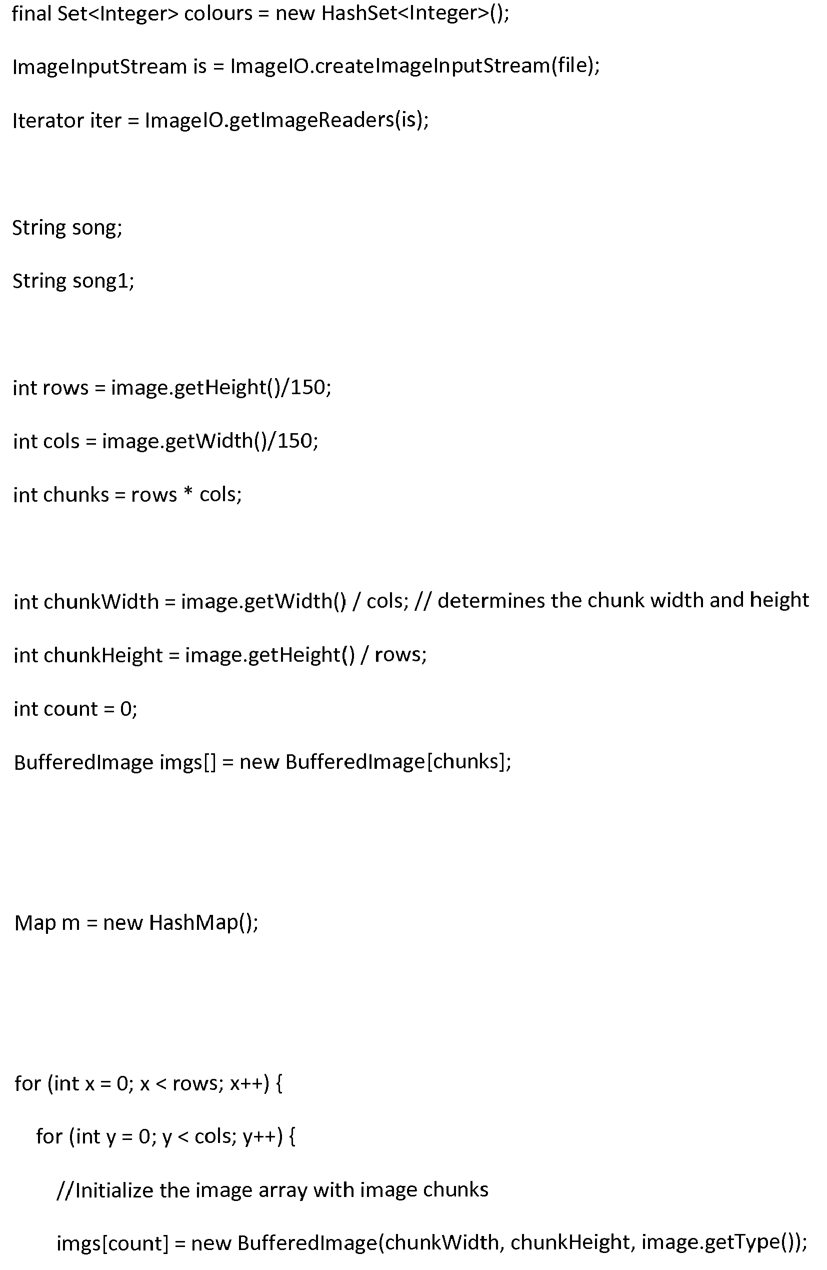

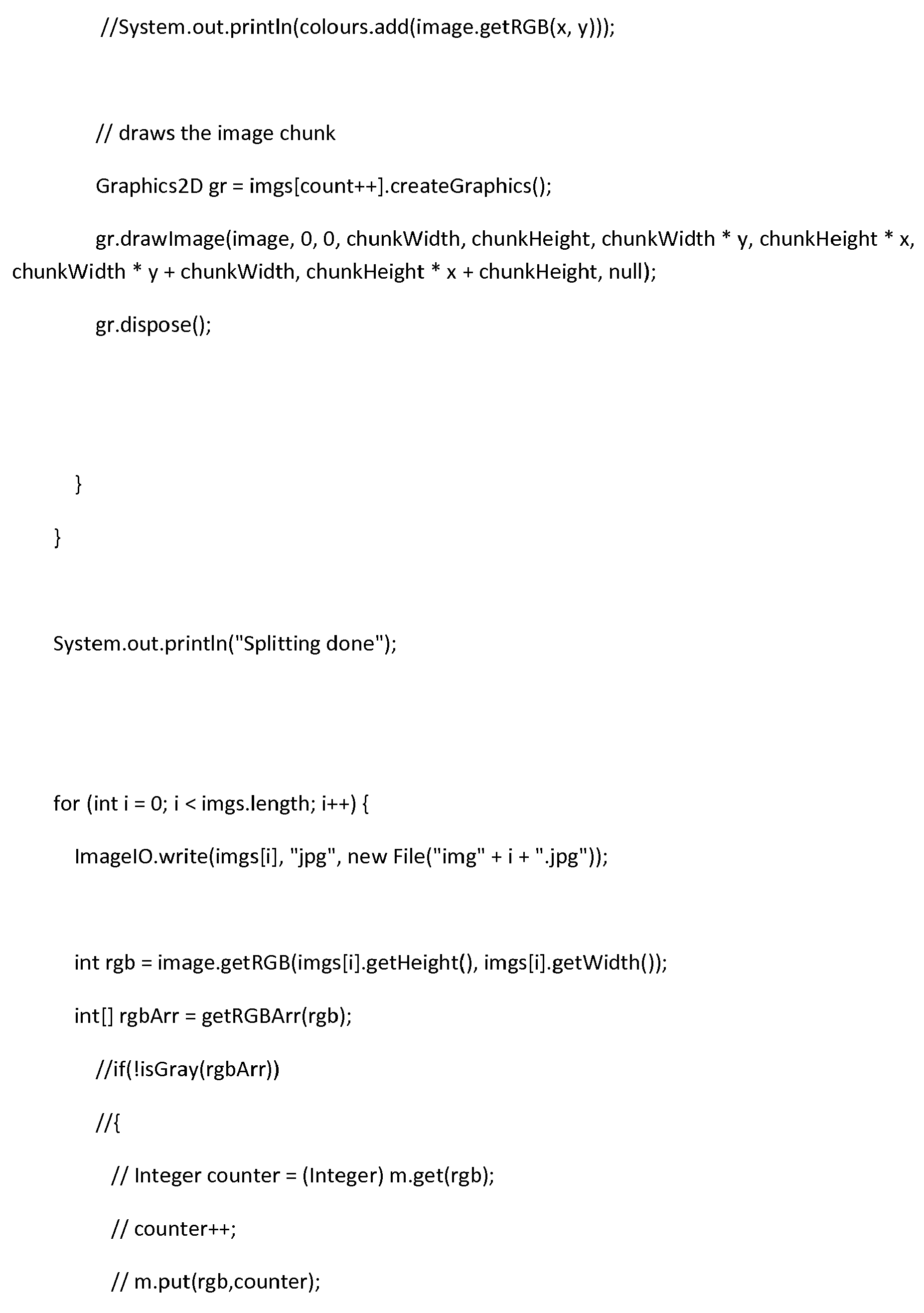

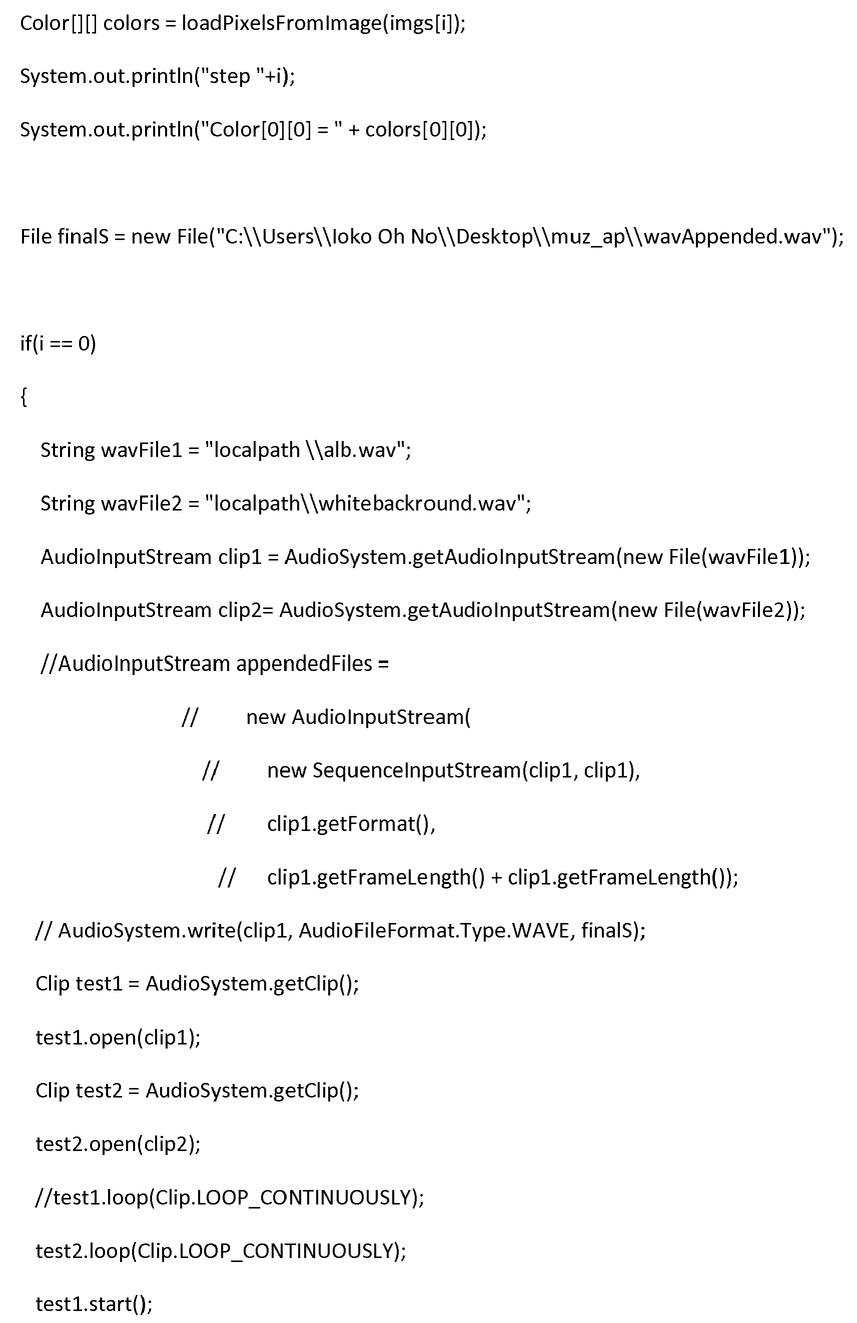

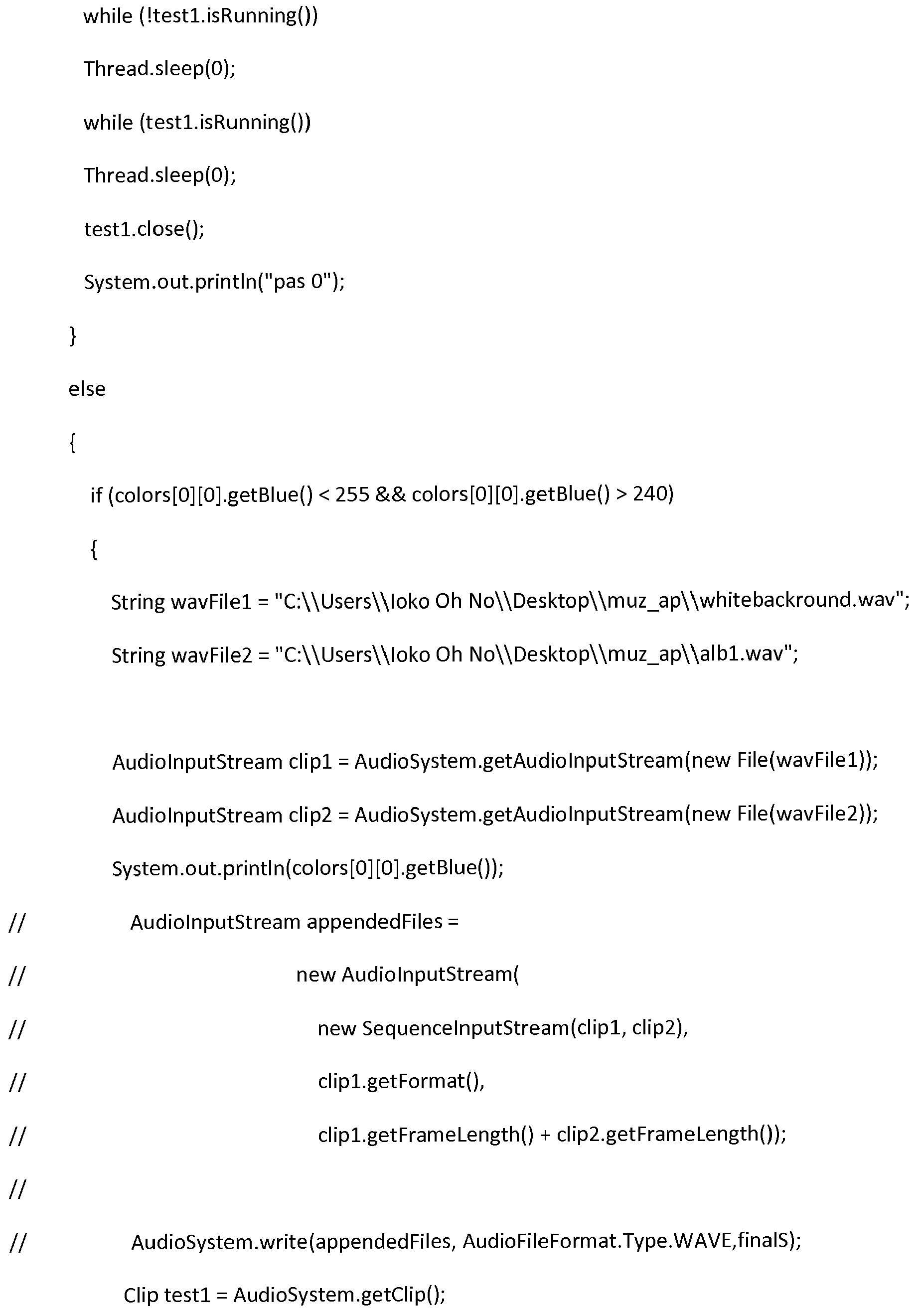

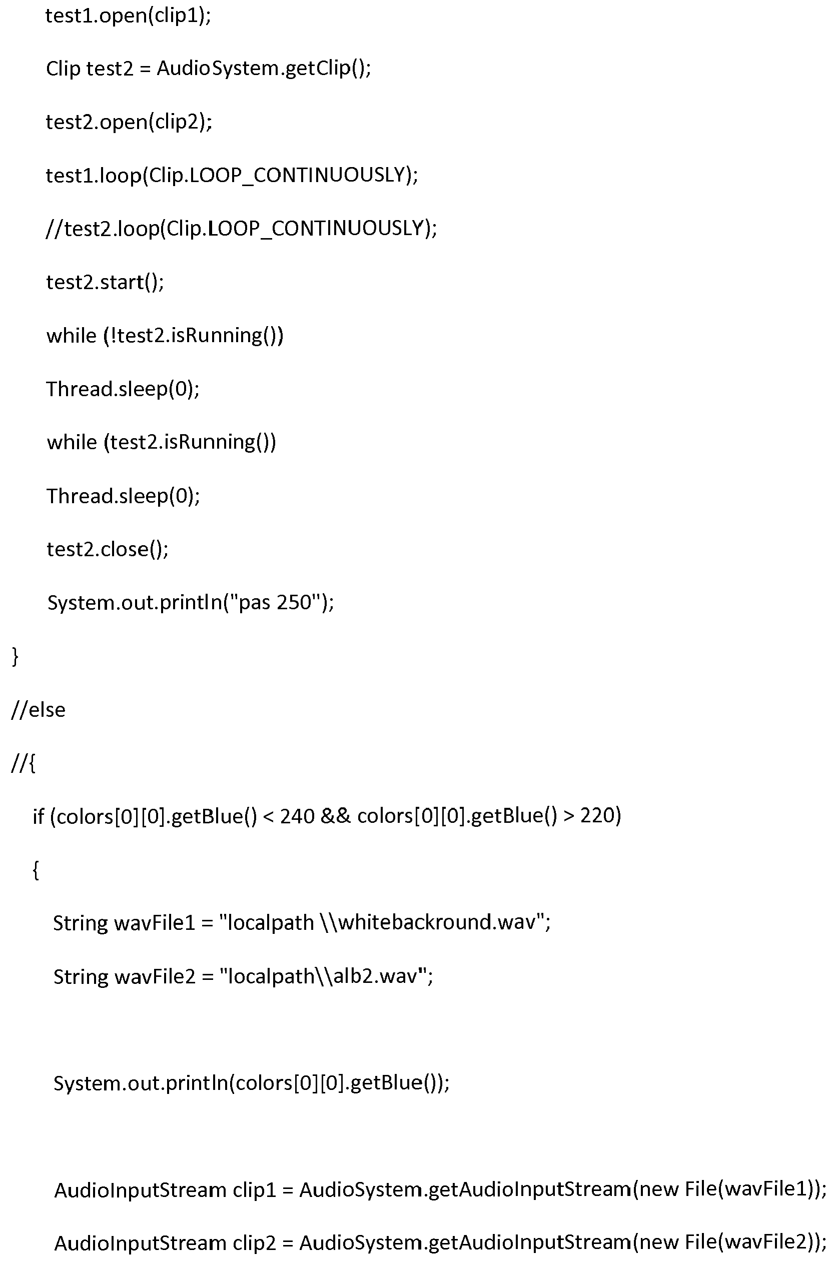

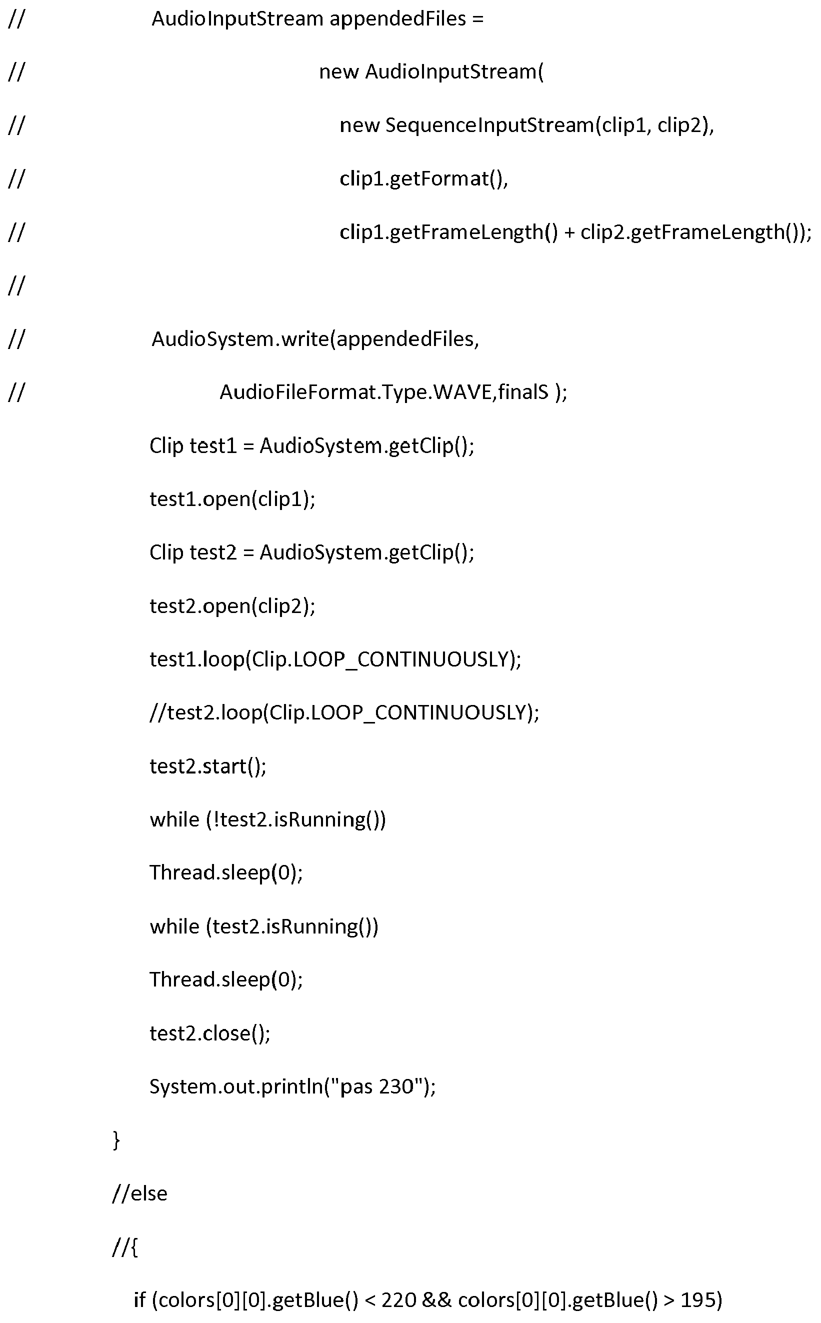

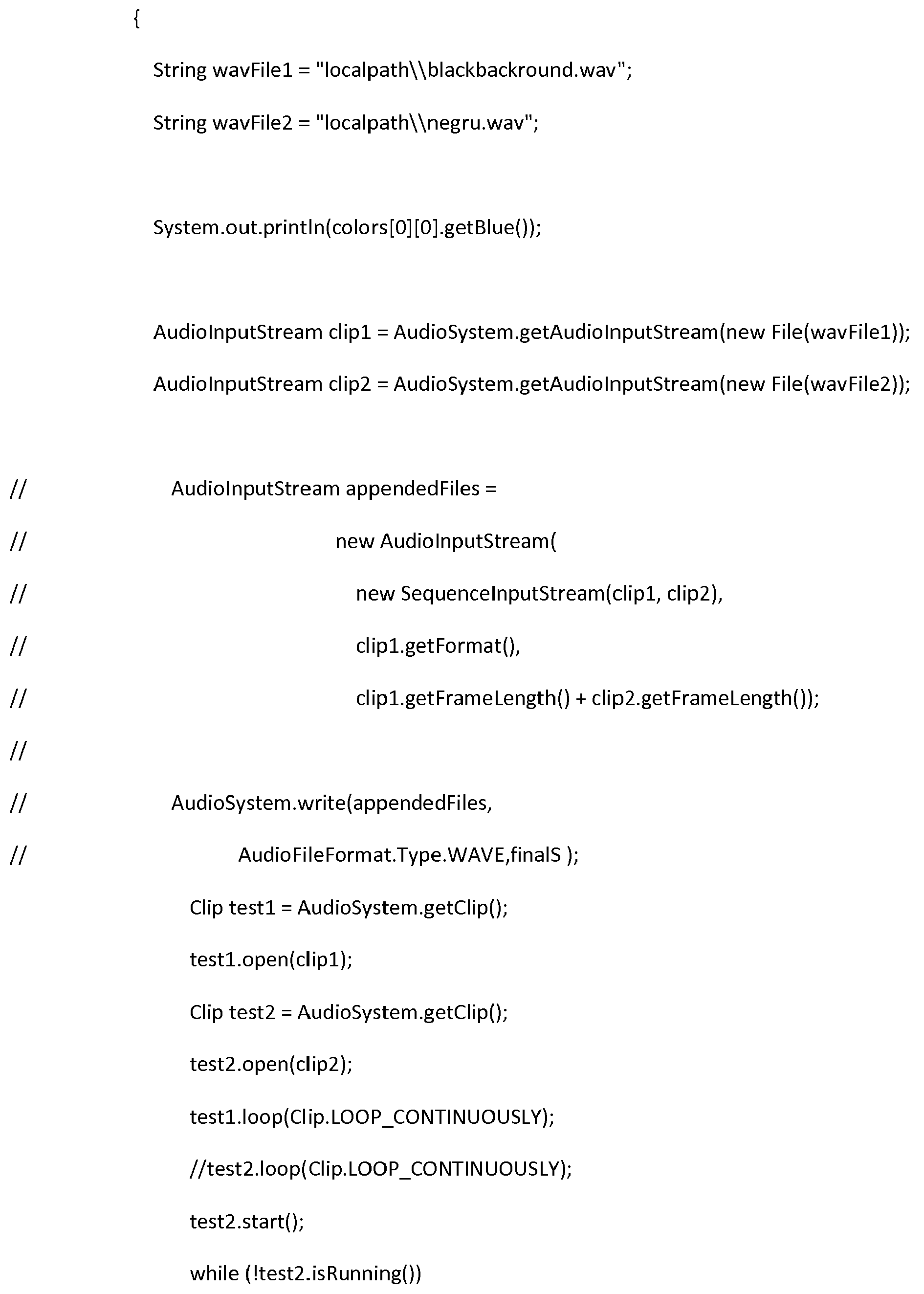

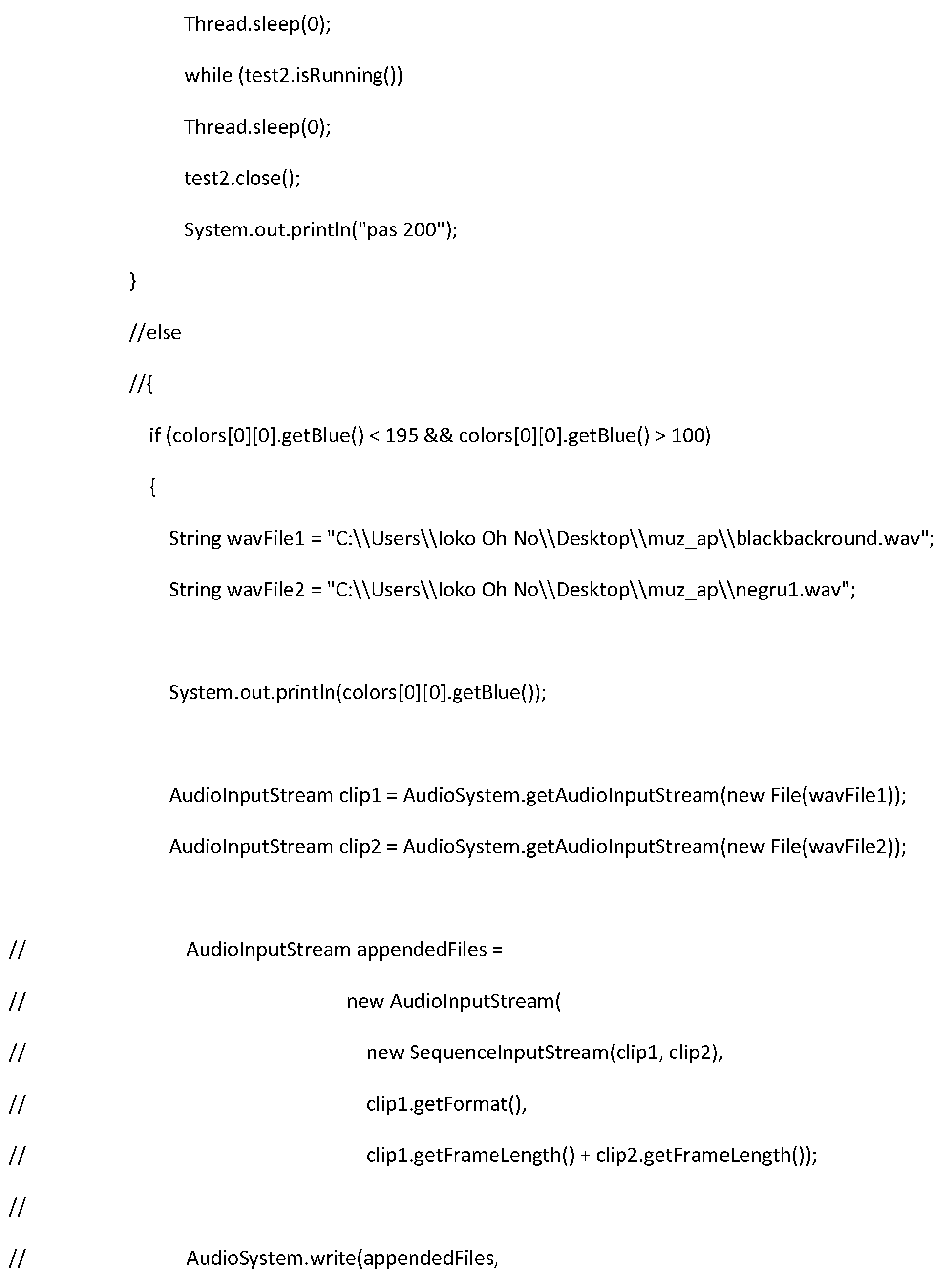

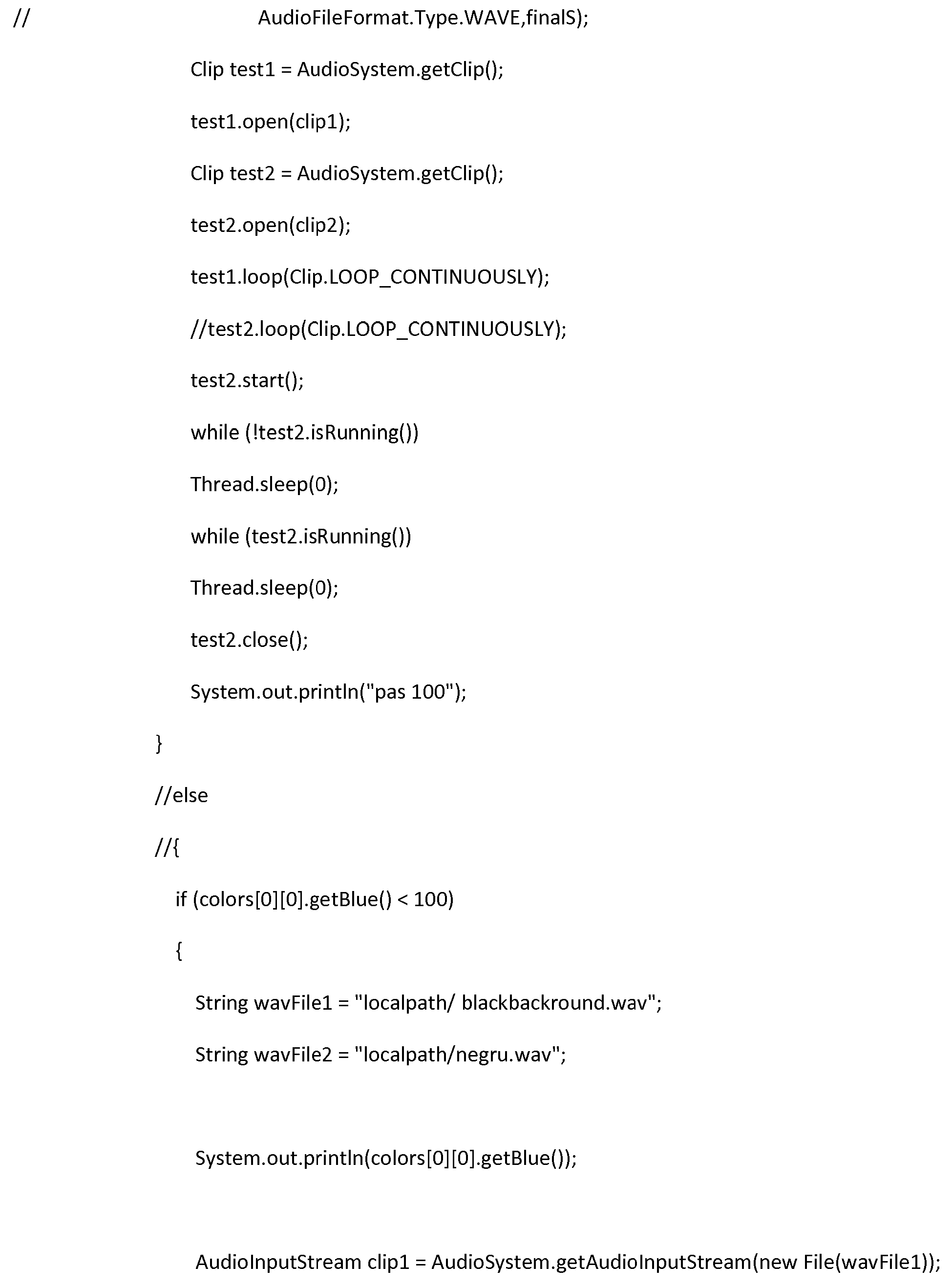

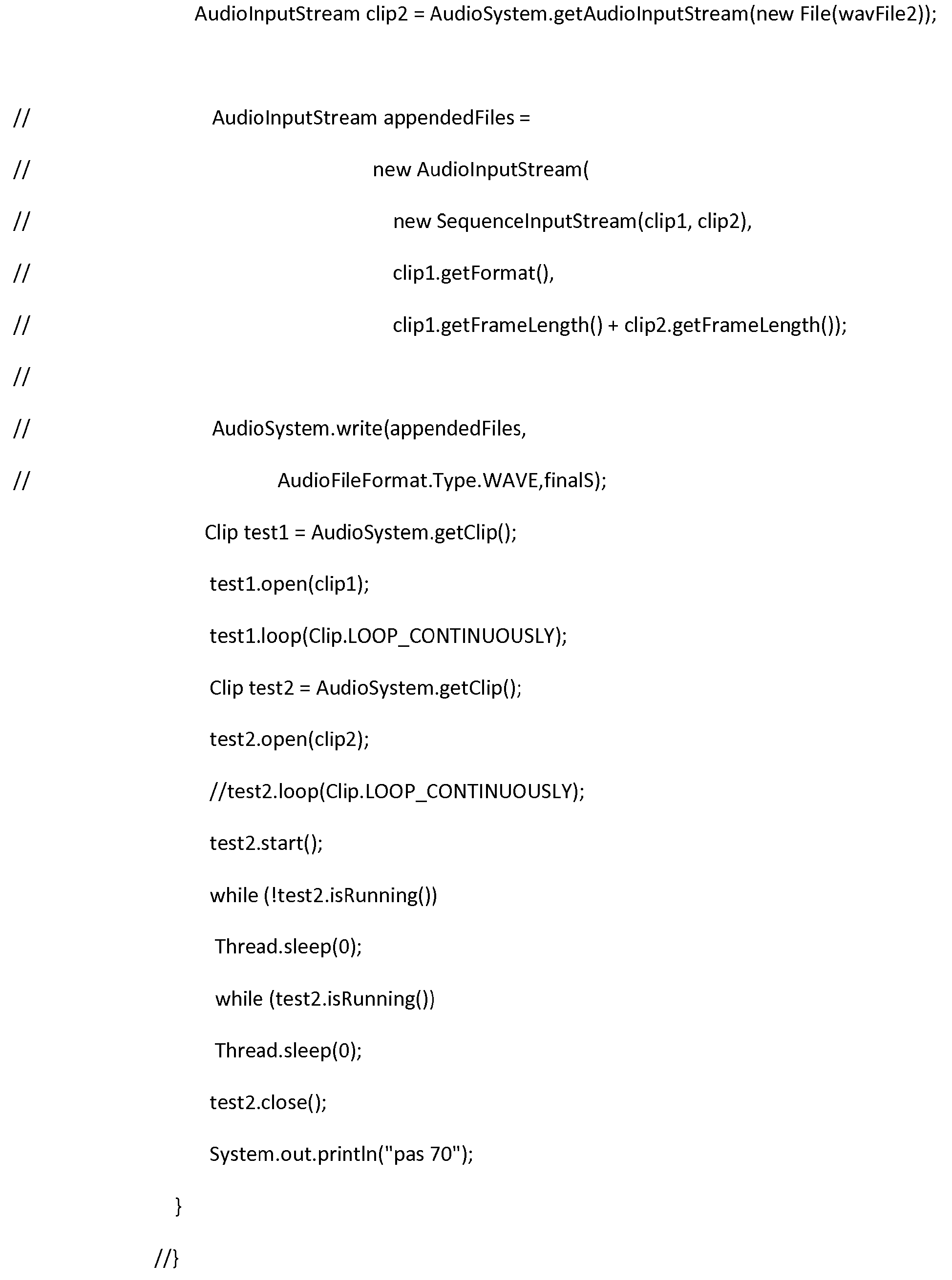

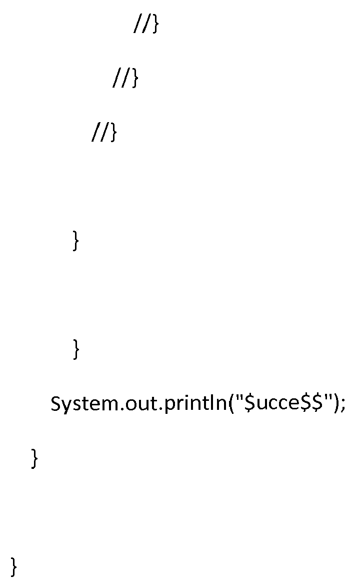

### Type of code: Java coded

### Missing parts still to be tested:

- length of photo = length of track needs to be fixed.
- all colors of the spectrum need to be added as defined above.
- shapes need to be defined and added to the code.

**Images on how application would look like:**

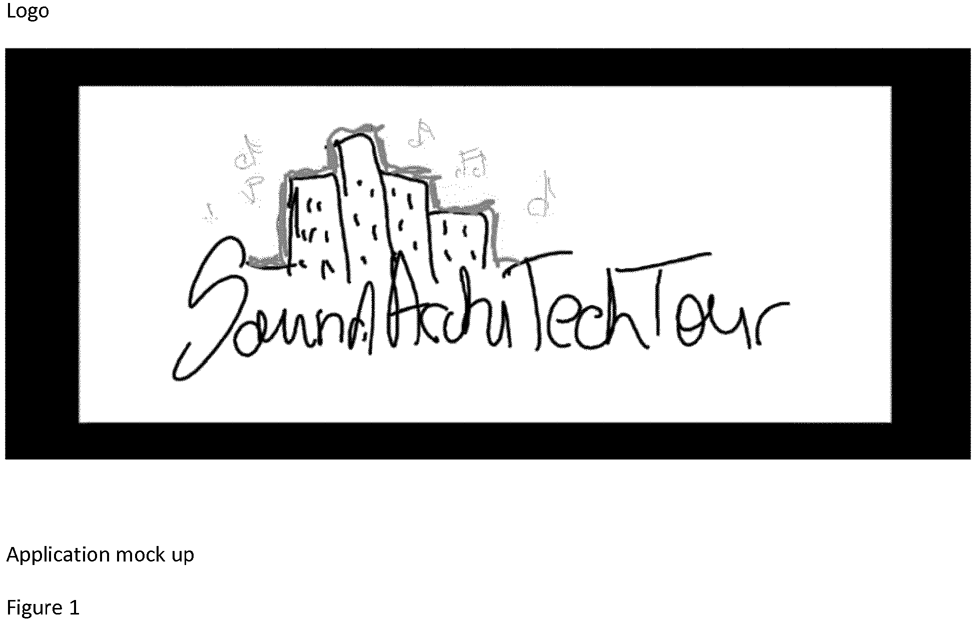

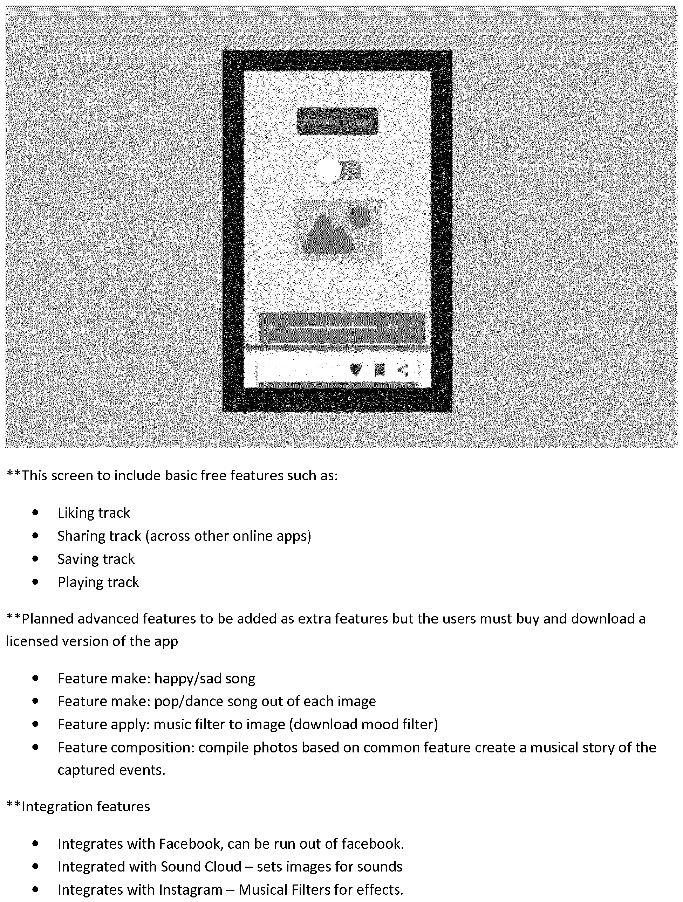

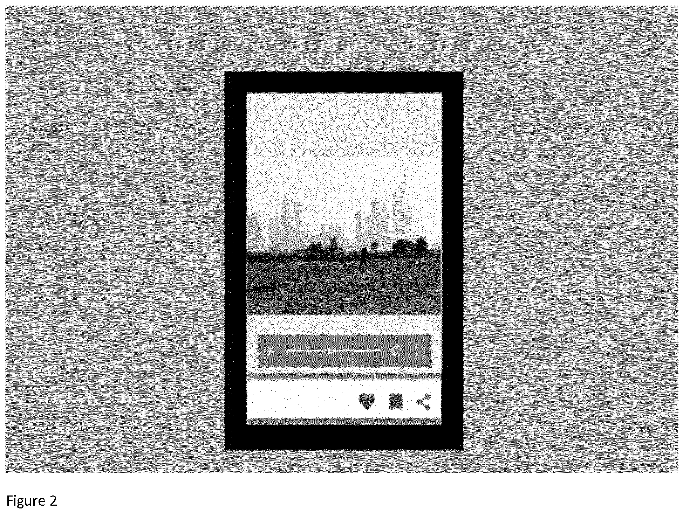

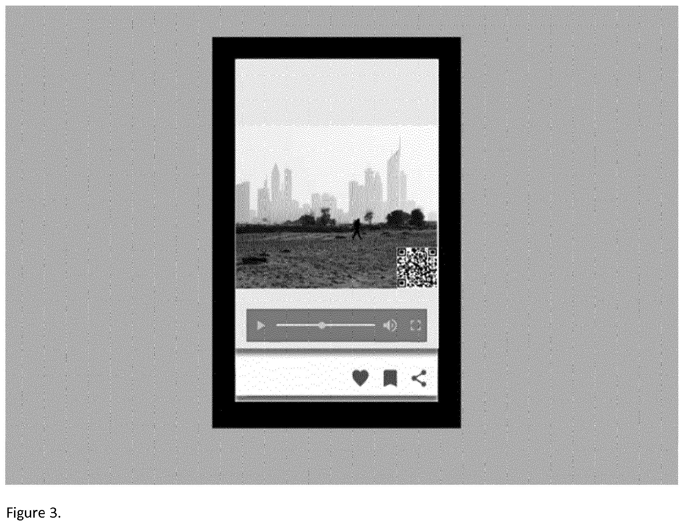

## Claims

1. A method for turning a 2d image/photograph into a musical composition (1) and an electronic application (1) based on a code (2) and a musical composition in wav (3); a surface display area of the application (3); a rectangular primary interaction area (31) is defined as an uploading point of the 2d image (3), and a secondary area (32) is defined as the code where the composition is created (3) and the result is an audible musical composition (2), the creation method comprising:
(a) Determining whether a touch-drag action is initially from the primary display area (31) or the secondary area (32) when the code creates the composition (3) interacts with/upload of image;
(b) executing a composition creating action when image is uploaded in the interface (4) from the primary display area (31) and then the upload image action is operated by browsing and uploading the image (4) further from the primary display / upload area (31) to the secondary processing area (32); and
(c) Executing a music composition code action when the upload is operated by the user (4) from the secondary processing area (32) and then rendering of the music (4) further from the secondary processing area (32) to the primary display area (31).

2. The composition creation method in claim 1, further comprising:
Creating the musical rendition on the display page of the mobile application page when the upload action is operated (4) from the secondary processing area to (32) go back to the primary display area (31) after the step (b).

3. The composition creation method in claim 1, further comprising:
Creating/rendering the music composition in the code to play when the image is uploaded(4) from the primary display area (31) to the secondary processing area (32) after the step (c) .

4. A method for turning a 2d image/photograph into a musical composition (1) and an electronic application (1) based on a code (1), the apparatus comprising:
A application display (2); and
a code processing the music composition based on the image (3), an uploading point for the image (3); a primary display area (31) and (32) a processing / rendering of the musical composition of the image;
wherein a creating the composition action is determined by uploading an image (4) from the primary area (31) to the secondary processing area (32)rendering the musical composition (4) from the secondary processing area (32) to the primary display area (31).
